# EUROPÄISCHE PATENTSCHRIFT

(11) **EP 4 062 591 B1**
(45) Veröffentlichungstag und Bekanntmachung des Hinweises auf die Patenterteilung: **06.11.2024**
(21) Anmeldenummer: 20811977.6
(22) Anmeldetag: 10.11.2020
(51) Int. Cl.: H04L 9/40, H04L 12/40

(54) **VERFAHREN ZUR ÜBERWACHUNG DER KOMMUNIKATION AUF EINEM KOMMUNIKATIONSBUS, ELEKTRONISCHE VORRICHTUNG ZUM ANSCHLUSS AN EINEN KOMMUNIKATIONSBUS, SOWIE ZENTRALE ÜBERWACHUNGSVORRICHTUNG ZUM ANSCHLUSS AN EINEN KOMMUNIKATIONSBUS**
METHOD FOR MONITORING COMMUNICATION ON A COMMUNICATION BUS, ELECTRONIC DEVICE FOR CONNECTION TO A COMMUNICATION BUS, AND CENTRAL MONITORING DEVICE FOR CONNECTION TO A COMMUNICATION BUS
PROCÉDÉ DE SURVEILLANCE DE LA COMMUNICATION SUR UN BUS DE COMMUNICATION, DISPOSITIF ÉLECTRONIQUE POUR CONNEXION À UN BUS DE COMMUNICATION AINSI QUE DISPOSITIF DE SURVEILLANCE CENTRAL POUR CONNEXION À UN BUS DE COMMUNICATION

(30) Priorität: 22.11.2019 DE 102019218045
(43) Veröffentlichungstag der Anmeldung: 28.09.2022
(73) Patentinhaber: VOLKSWAGEN AKTIENGESELLSCHAFT, 38440 Wolfsburg (DE)
(72) Erfinder: KAMP, Birger, 38531 Rötgesbüttel (DE); BUNIMOV, Viktor, 38159 Vechelde (DE); FORNER, Sascha, 15834 Rangsdorf (DE); HANNIG, Roland, 13189 Berlin (DE)
(86) Internationale Anmeldenummer: PCT/EP2020/081658
(87) Internationale Veröffentlichungsnummer: WO 2021/099186

(56) Entgegenhaltungen:
- EP-A1- 3 148 154
- EP-A1- 3 696 025
- WO-A1-2019/074000
- WO-A1-2019/142741
- DE-A1- 102015 205 670
- US-A1- 2016 308 891
- US-A1- 2020 053 112

## Beschreibung

Die Erfindung betrifft das technische Gebiet der Überwachung der Kommunikation auf einem Kommunikationsbus auf unberechtigte Buszugriffe. Dieses Verfahren kann insbesondere bei Kommunikationsbussen eingesetzt werden, die in Fahrzeugen eingesetzt werden. Vernetzte Steuergeräte sind auch in anderen Gebieten der Technik zu finden, z.B. in der Automatisierungstechnik, Prozesstechnik, usw. Die Erfindung betrifft weiterhin eine elektronische Station zum Anschluss an einen Kommunikationsbus.

In modernen Fahrzeugen werden eine Vielzahl von Steuergeräten verbaut. Alleine für den Antriebstrang werden eine Anzahl Steuergeräte eingesetzt, so z.B. Motor-Steuergerät, Getriebe-Steuergerät, Wählhebel-Steuergerät, Airbag-Steuergerät und weitere. Daneben gibt es auch noch weitere Steuergeräte, die im Bereich der Fahrzeugkarosserie verbaut werden und für bestimmte Komfortfunktionen sorgen. Als Beispiele werden genannt die Tür- oder Fensterheber-Steuergeräte, Klimaanlagen-Steuergeräte, Sitzverstellungs-Steuergeräte, u.a. Dann gibt es weiterhin Steuergeräte, die zu dem Infotainment-Bereich zählen, wie Kamera-Steuergerät zur Umfeldbeobachtung, Navigationsgerät, Kommunikationsmodul und Entertainment-Gerät mit TV, Radio, Video und Musik-Funktion.

Typischerweise werden die Steuergeräte der verschiedenen Kategorien jeweils mit einem separaten, für die Gerätekategorie entsprechend ausgelegten Bus vernetzt. Es können daher mehrere verschiedene Bussysteme im Fahrzeug eingesetzt werden. Die verschiedenen Bussysteme können dabei über Gateways miteinander verbunden sein, um einen Datenaustausch zu ermöglichen. Im Bereich der Antriebstrang-Steuergeräte wird typischerweise der CAN-Bus (Controller Area Network) eingesetzt, ebenfalls im Bereich der Komfort-Steuergeräte. Im Infotainment-Bereich kommen auch andere Bussysteme zum Einsatz, wie Bussysteme die auf Ethernet-Technologie beruhen, z.B. AVB (Audio Video Bridging) der auf der Standard-Familie nach IEEE 802.1 Standard basiert. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus).

Bussysteme im Kraftfahrzeugbereich gelangen zunehmend in den Fokus von Hackerangriffen und den Versuchen, Botschaftsinhalte vorsätzlich zu manipulieren. Solche Hackerangriffe auf das Bussystem geschehen typischerweise über eine Aufschaltung an das physikalische Übertragungsmedium, also die Busleitung, oder über Zugriff auf eine sogenannte OBD-Buchse (On Board Diagnose-Schnittstelle). Die Cyber-Sicherheit gelangt auch deswegen immer mehr in den Fokus, weil immer komplexere Fahrerassistenzsysteme in die Fahrzeuge gelangen bis hin zu dem automatisierten Fahren. Manipulationen müssen hier ausgeschlossen werden.

Es besteht daher ein Bedarf, die Kommunikation auf den Kommunikationsbussen im Fahrzeug wie auch anderswo immer weiter abzusichern.

Der CAN-Bus ist im Kraftfahrzeugbereich besonders verbreitet und wird häufig für die Vernetzung von sicherheitsrelevanter Elektronik im Fahrzeug eingesetzt. Deshalb besteht hier ein besonderer Bedarf für eine Absicherung der Kommunikation.

Aus der DE 10 2015 205 670 A1 ist ein Angriffserkennungsverfahren für ein Bussystem eines Kraftfahrzeuges und eine entsprechende Vorrichtung bekannt. Es geht dabei darum, Angriffe von außen auf das Bussystem zu erkennen und abzuwehren. Dazu wird in einem Gateway des Bussystems ein Modul installiert, das nach einem allgemeinen Ansatz überprüft, ob die auf dem Bus übertragenen Nachrichten nach den Kommunikationsregeln übertragen wurden. Darunter fallen verschiedene Kommunikationsregeln: Nach einem Aspekt prüft das Modul bestimmte Eigenschaften eines festgelegten Nachrichtenzyklusses. Darunter fallen z.B. jeweils die Zeit zwischen zwei aufeinanderfolgenden Nachrichten und wenn es erkennt, dass der zeitliche Abstand zweier aufeinanderfolgenden Nachrichten nicht mit der vorgegebenen Zyklusdauer übereinstimmt, gibt es eine Warnmeldung aus. Nach einem anderen Aspekt prüft das Modul, ob jeweils aufeinanderfolgend nur identische Nachrichten übertragen werden. Die Überprüfungsaspekte können einen bestimmten Nachrichtentyp betreffen.

Aus der DE 10 2016 220 895 A1 ist es bekannt bei einem CAN-Netzwerk Maßnahmen zu treffen, mit denen eine Erkennung von Manipulationen möglich wird. Dabei wird ein Basic-CAN-Controller bzw. ein Full-CAN-Controller mit einer RX-Filtereinrichtung erweitert, die die zum Senden bestimmten CAN-Identifizierer mit denjenigen der empfangenen CAN-Botschaften vergleicht.

Aus der DE 10 2017 216 808 A1 ist ein Überwachungsverfahren für den CAN-Bus bekannt. Darin wird die beim CAN-Bus bestehende Eindeutigkeitsregel ausgenutzt, die darin besteht, dass es verboten ist, dass eine andere Station eine Nutzdaten-Botschaft mit einem Identifizierer versendet, der schon für diese Station reserviert ist. Wenn eine Verletzung der Eindeutigkeitsregel festgestellt wird, wurde ein unberechtigter Buszugriff festgestellt.

Aus der DE 10 2017 218 134 B3 ist ein Verfahren zum Übertragen einer Botschaftsfolge über einen Datenbus bekannt. Es wird eine ein Informationssignal enthaltende Informationsbotschaft während einer aktiven Phase übertragen und eine Sicherheitsbotschaft zum Einleiten einer Ruhephase sowie ein Ruhesignal enthaltende Ruhebotschaften im Abstand einer Ruhezykluszeit während der Ruhephase übertragen. Das Informationssignal und das Ruhesignal unterscheiden sich voneinander und sich die Sicherheitsbotschaft und die Ruhebotschaften unterscheiden sich ebenfalls voneinander.

Aus der EP 3 148 154 A1 ist eine Controller Area Network (CAN)-Vorrichtung mit einem Vergleichsmodul bekannt. Das Vergleichsmodul ist so konfiguriert, dass es eine Schnittstelle mit einem CAN-Transceiver bildet, und weist eine Empfangsdaten-(RXD)-Schnittstelle, einen CAN-Decoder, einen Identifikatorspeicher, einer Vergleichslogik und einen Signalgenerator auf. Die Empfangsdaten-(RXD)-Schnittstelle ist so konfiguriert, dass sie Daten vom CAN-Transceiver empfängt. Der CAN-Decoder ist so konfiguriert, dass er einen Identifikator einer von der RXD-Schnittstelle empfangenen CAN-Nachricht decodiert. Der Identifikatorspeicher ist so konfiguriert, dass er einen Eintrag speichert, der mindestens einem Identifikator entspricht. Die Vergleichslogik ist so konfiguriert, dass sie einen empfangenen Identifikator aus einer CAN-Nachricht mit dem Eintrag vergleicht, der in dem Identifikatorspeicher gespeichert ist, und ein Übereinstimmungssignal ausgibt, wenn der Vergleich anzeigt, dass der empfangene Identifikator der CAN-Nachricht mit einem gespeicherten Eintrag übereinstimmt. Der Signalgenerator ist so konfiguriert, dass er als Reaktion auf das Übereinstimmungssignal ein Signal zum Ungültigmachen der CAN-Nachricht ausgibt.

Aus der US 2016/0308891 A1 ist ein Mechanismus zur Erkennung von Eindringversuchen bekannt. Der Mechanismus nutzt ein Verfahren, das auf einem mit einem Netzwerkbus verbundenen Knoten implementiert ist. Bei dem Verfahren werden Nachrichtenidentifikatoren gespeichert, wobei zumindest einer der Nachrichtenidentifikatoren den Knoten identifiziert. Dieser zumindest eine Nachrichtenidentifikator ist in einer Nachricht zu einem Zeitpunkt enthalten, zu dem die Nachricht von dem Knoten an den Netzwerkbus gesendet wird. Bei dem Verfahren wird zudem der Netzwerkbusverkehr überwacht. Dieser umfasst Nachrichten, die von dem Knoten und von anderen Knoten, die mit dem Netzwerkbus verbunden sind, gesendet werden. Wenn eine Nachricht, die auf dem Netzwerkbus von mindestens einem der anderen Knoten gesendet wird, als einen Nachrichtenidentifikator aufweisend identifiziert wird, der dem mindestens einen Nachrichtenidentifikator entspricht, wird ein Prozessor des Knotens alarmiert.

Aus der DE 10 2015 205 670 A1 ist ein Angriffserkennungsverfahren für ein Bussystem eines Kraftfahrzeugs bekannt, wobei für das Bussystem Kommunikationsregeln für das Senden von Nachrichten festgelegt sind. Bei dem Verfahren Nachrichten empfangen, die über das Bussystem geschickt werden, und es wird analysiert, ob die empfangenen Nachrichten gemäß den Kommunikationsregeln empfangen werden.

Aus der WO 2019/142741 A1 ist ein Server zur Erkennung von Fahrzeuganomalien bekannt. Der Server umfasst einen Kommunikator, der mit einem Fahrzeug kommuniziert, um ein Protokoll eines fahrzeuginternen Netzwerks zu empfangen. Der Server umfasst zudem einen Fahrzeugselektor, der, wenn Informationen erhalten werden, die anzeigen, dass eine Anomalie bei einem ersten Fahrzeug aus einer Vielzahl von Fahrzeugen auftritt, ein mit der Anomalie in Verbindung stehendes Fahrzeug aus der Vielzahl von Fahrzeugen auf der Grundlage der Anomalie auswählt, wobei das erste Fahrzeug das Fahrzeug ist, das mit dem Kommunikator kommuniziert. Der Server umfasst zudem einen Protokollsammler, der an das mit der Anomalie in Verbindung stehende Fahrzeug über den Kommunikator eine erste Anforderung zum Übertragen eines Protokolls eines fahrzeuginternen Netzwerks überträgt. Darüber hinaus umfasst der Server einen Protokollanalysator, der auf der Grundlage von Informationen, die durch das von dem mit der Anomalie in Verbindung stehenden Fahrzeug in Reaktion auf die erste Anforderung übertragene und von dem Kommunikator empfangene Protokoll angegeben werden, bestimmt, ob eine Anomalie bei dem mit der Anomalie in Verbindung stehenden Fahrzeug auftritt.

Aus der WO 2019/074000 A1 ist eine Fahrzeugsteuervorrichtung für ein fahrzeugmontiertes System bekannt, das eine Vielzahl von Informationsverarbeitungsvorrichtungen enthält, die über einen Kommunikationsbus miteinander verbunden sind. Die Fahrzeugsteuervorrichtung ist eingerichtet, Informationen zu verarbeiten, die erste und zweiter Verwaltungsinformationen enthalten. Die ersten Verwaltungsinformationen beziehen sich auf Sicherheitsanomalien, bei denen es sich um Kommunikationsdatenanomalien handelt, die einem Sicherheitsangriff von außerhalb des fahrzeugmontierten Systems zuzuschreiben sind. Die zweiten Verwaltungsinformationen beziehen sich auf Sicherheitsanomalien, bei denen es sich um Kommunikationsdatenanomalien handelt, die Anomalien innerhalb des fahrzeugmontierten Systems zuzuschreiben sind.

Die Erfindung setzt sich zum Ziel, ein wirkungsvolles Überwachungsverfahren für einen Kommunikationsbus anzugeben, das nicht nur unberechtigte Buszugriffe erkennen kann, sondern auch eine Chance bietet, die manipulierten Stationen, die die eingeschleusten Botschaften aussenden, zu identifizieren.

Diese Aufgabe wird durch ein Verfahren zur Überwachung der Kommunikation auf einem Kommunikationsbus gemäß Anspruch 1, eine elektronische Station gemäß Anspruch 6, sowie eine zentrale Überwachungsstation für einen Kommunikationsbus gemäß Anspruch 8 gelöst.

Die abhängigen Ansprüche beinhalten vorteilhafte Weiterbildungen und Verbesserungen der Erfindung entsprechend der nachfolgenden Beschreibung dieser Maßnahmen.

Die Lösung besteht in einem Verfahren zur Überwachung der Kommunikation auf einem Kommunikationsbus, durch den eine Anzahl von elektronischen Stationen vernetzt sind. Das Botschaftsformat ist so gestaltet, dass die Botschaften durch einen Identifizierer gekennzeichnet sind, wobei für jede Station festgelegt ist, welche Botschaften mit welchem Identifizierer von der Station gesendet werden dürfen. Es besteht dabei eine Eindeutigkeitsregel, die verbietet, dass eine andere Station eine Nutzdaten-Botschaft mit einem Identifizierer versendet, der schon für diese Station reserviert ist. Von einer Protokolleinheit in einem Steuergerät wird eine Liste geführt über die Identifizierer der von der Station gesendeten Botschaften. Die Liste erlaubt die Erkennung einer Verletzung der Eindeutigkeitsregel, so dass Sicherungsmaßnahmen gegen eine identifizierte Station eingeleitet werden können. Das Führen der Liste in der jeweiligen Station hat den Vorteil, dass das Überwachungssystem selbstlernend gestaltet ist, so dass keine Vorinstallation der Listen erforderlich ist und der Funktionsumfang der Stationen durch nachträgliche Freischaltung von Funktionsmerkmalen oder ein nachträgliches Software-Update verändert werden kann, ohne eine Umprogrammierung von Listen in der Werkstatt vornehmen zu müssen. Ein weiterer Vorteil besteht darin, dass keine Abhängigkeit vom Host der Station besteht und das Überwachungsverfahren deshalb sehr sicher gestaltet werden kann. Zusätzlich besteht ein Vorteil darin, dass die Möglichkeit besteht, das Überwachungsverfahren mit Hilfe eines Software-Updates noch nachträglich in die Station zu bringen.

Erfindungsgemäß wird die Liste an eine an den Kommunikationsbus angeschlossene zentrale Überwachungsstation gesendet mit einer Botschaft, die einen Eintrag für eine Kennung der sendenden Station beinhaltet, wobei von einer in der zentralen Überwachungsstation installierten übergeordneten Überwachungsinstanz ein Vergleich der in der Liste verzeichneten Identifizierer mit einer Tabelle vorgenommen wird, in der die Kennungen bzgl. der Identifikation der Stationen des Kommunikationsbusses und die Referenzlisten mit den pro Station zugeordneten Identifizierern verzeichnet sind, die in Botschaften von der die Liste sendenden Station versendet werden dürfen. Diese Maßnahme erlaubt die Identifikation der Station, die eine gefälschte Botschaft eingeschleust hat (Angreifer-Steuergerät). Das macht das Überwachungssystem bedeutend sicherer, weil dann gezielte Sicherungsmaßnahmen gegen das identifizierte, manipulierte Steuergerät eingeleitet werden können.

Dabei ist es vorteilhaft, wenn die Protokolleinheit die Liste sukzessive aufbaut, indem ein neuer Listeneintrag generiert wird, wenn von der Station eine Botschaft mit einem Identifizierer verschickt wird, der zuvor noch nicht in die Liste eingetragen wurde. Damit werden doppelte Einträge in dem Speicher vermieden und es kann Speicherplatz gespart werden.

In einer Variante wird die Nachricht mit der protokollierten Liste an die an den Kommunikationsbus angeschlossene zentrale Überwachungsstation mit übergeordneter Überwachungsinstanz gesendet, wenn ein Ende eines Arbeitszyklus erkannt wird. Ein Arbeitszyklus kann im einfachsten Fall in der Phase vom Einschalten bis zum Ausschalten der Stromversorgung des Kommunikationssystem bestehen.

Diese Überwachungsverfahren kann besonders vorteilhaft bei einem Kommunikationsbus nach einer Variante der Familie des CAN-Busses, entsprechend Controller Area Network-Busses eingesetzt werden. Hier bietet es sich an, dass als Sicherungsmaßnahme für den Fall, dass von der Überwachungsinstanz eine Station identifiziert wird, bei der die zugehörige Referenzliste keinen Eintrag für einen in der empfangenen Liste verzeichneten Identifizierer aufweist, das Auslösen des Bus-Off-Zustandes für die identifizierte Station durchgeführt wird. Bei dem Bus-Off-Zustand wird die Station vom Kommunikationsbus genommen. In dem Zustand kann sie dann keine gefälschten Botschaften mehr versenden. Andere Sicherungsmaßnahmen könnten ebenfalls so eingeleitet werden. Als Beispiel anderer Sicherungsmaßnahmen werden genannt: Das Einleiten eines abgesicherten Modus, sodass keine Gefährdung von der Station ausgeht, z.B. einem Angreifer-Steuergerät. Viele Steuergeräte sind mit einem Notlaufmodus ausgestattet, in dem sie nur eine Grundfunktion ausführen. Mit dieser Grundfunktion kann z.B. bei einem Fahrzeugnetzwerk zwar nicht mehr die volle Leistung des Fahrzeuges abgerufen werden, aber das Fahrzeug kann noch eine Werkstatt anfahren. Der CAN-Bus wird seit Anfang der 90er Jahre in Fahrzeugen eingesetzt und ist dort sehr verbreitet. Die Datenübertragungen, die über diesen Kommunikationsbus stattfinden sind sicherheitsrelevant und deshalb besteht ein hoher Bedarf für die Absicherung der Kommunikation über den CAN-Bus vor Manipulationen.

Beispiele von weiteren Sicherungsmaßnahmen, die bei dem Verfahren eingesetzt werden können, sind:
- Ausgeben einer Warnmeldung an den Fahrzeugführer, beispielsweise mit einem optischen, akustischen oder haptischen Signal,
- Einschalten der Alarmanlage,
- Absetzen einer Manipulationsmeldung über Funk an einen Datenbank-Zentralrechner des Fahrzeugherstellers oder einer Behörde oder an ein Smartphone des Fahrzeughalters,
- Abspeichern von Ort, Datum, Zeit des Manipulationsereignisses in einem Speicher
- Blockieren des Schlüssels, mit dem das Fahrzeug eingeschaltet wurde.

Die Aufzählung erhebt keinen Anspruch auf Vollständigkeit, auch können mehrere der aufgelisteten Sicherungsmaßnahmen parallel eingesetzt werden.

Eine Zuschneidung des Verfahrens für die Verwendung bei einem CAN-Bus besteht darin, dass der Identifizierer, der protokolliert wird, einem CAN-Bus Botschafts-Identifizierer entspricht.

Die überwachten Nutzdaten-Botschaften können einem sogenannten CAN-Bus Standard Data Frame entsprechen.

In einer anderen Ausprägung betrifft die Erfindung eine elektronische Station zum Anschluss an einen Kommunikationsbus. Durch den Kommunikationsbus sind eine Anzahl von elektronischen Stationen vernetzt, wobei die über den Kommunikationsbus übertragenen Botschaften mit einem Identifizierer gekennzeichnet sind, wobei für jede Station festgelegt ist, welche Botschaften mit welchem Identifizierer von der Station gesendet werden dürfen, wobei eine Eindeutigkeitsregel gilt, die verbietet, dass eine andere Station eine Nutzdaten-Botschaft mit einem Identifizierer versendet, der schon für diese Station reserviert ist. Die Station weist eine Protokolleinheit auf, die ausgelegt ist, eine Liste zu führen über die Identifizierer, der von der Station gesendeten Botschaften.

Die Station weist zudem eine Logikeinheit auf, die ausgelegt ist, die von der Protokolleinheit geführte Liste an eine an den Kommunikationsbus angeschlossene zentrale Überwachungsstation mit einer übergeordneten Überwachungsinstanz zu versenden mit einer Botschaft, die einen Eintrag für eine Kennung der sendenden Station beinhaltet. Von der übergeordneten Überwachungsinstanz wird ein Vergleich der in der Liste verzeichneten Identifizierer mit einer Tabelle vorgenommen, in der die Kennungen bzgl. der Identifikation der Stationen und Referenzlisten mit den pro Station zugeordneten Identifizierern verzeichnet sind, die in Botschaften von der die Liste sendende Station versendet werden dürfen. Von einer Sendeeinheit der zentralen Überwachungsstation wird eine Sicherungsbotschaft mit einer Sicherungsmaßnahme an die Station versendet, falls die zugehörige Referenzliste keinen Eintrag für einen in der empfangenen Liste verzeichneten Identifizierer aufweist.

Die Logikeinheit der elektronischen Vorrichtung ist ausgelegt, die Sicherungsnachricht von der zentralen Überwachungsstation zu empfangen und eine in der Sicherungsnachricht mitgeteilte Sicherungsmaßnahme durchzuführen. Es ergeben sich die gleichen Vorteile wie für das erfindungsgemäße Verfahren.

Eine Lösung besteht zudem in einer zentralen Überwachungsstation zum Anschluss an einen Kommunikationsbus, wobei durch den Kommunikationsbus eine Anzahl von elektronischen Stationen vernetzt sind, wobei die über den Kommunikationsbus übertragenen Botschaften mit einem Identifizierer gekennzeichnet sind, wobei für jede Station festgelegt ist, welche Botschaften mit welchem Identifizierer von der Station gesendet werden dürfen, wobei eine Eindeutigkeitsregel gilt, die verbietet, dass eine andere Station eine Nutzdaten-Botschaft mit einem Identifizierer versendet, der schon für diese Station reserviert ist, und wobei von einer Protokolleinheit in einer Station eine Liste geführt wird über die Identifizierer der von der Station tatsächlich gesendeten Botschaften, dadurch gekennzeichnet, wobei die zentrale Überwachungsstation ausgelegt ist, die Liste von einer Station zu empfangen mit einer Botschaft, die einen Eintrag für eine Kennung der sendenden Station beinhaltet, und wobei die zentrale Überwachungsstation eine übergeordnete Überwachungsinstanz beinhaltet, die ausgelegt ist einen Vergleich der in den Liste verzeichneten Identifizierer mit einer in der zentralen Überwachungsstation vorhandenen Tabelle vorzunehmen, in der die Kennungen bzgl. der Identifikation der Stationen des Kommunikationsbusses und Referenzlisten mit den pro Steuergerät zugeordneten Identifizierern verzeichnet sind, die in Botschaften von der die Liste sendende Station versendet werden dürfen.

Um Sicherungsmaßnahmen gegen die entlarvte Station durchzuführen ist es vorteilhaft, wenn die zentrale Überwachungsstation eine Sendeeinheit aufweist, die ausgelegt ist, eine Sicherungsbotschaft mit einer Sicherungsmaßnahme an diejenige Station zu versenden, deren Kennung mit der Kennung zu einer empfangenen Liste übereinstimmt, bei der die zugehörige Referenzliste keinen Eintrag für einen in der Liste verzeichneten Identifizierer aufweist.

Ein Ausführungsbeispiel der Erfindung ist in den Zeichnungen dargestellt und wird nachfolgend anhand der Figuren näher erläutert.

Es zeigen:
- Fig. 1: das Prinzip der Vernetzung von elektronischen Komponenten mittels CAN-Bus;
- Fig. 2: ein Blockdiagramm für ein Fahrzeug-Kommunikationsnetzwerk mit Steuergeräten verschiedener Kategorie;
- Fig. 3: das Format des Standard Frame-Übertragungsrahmens beim CAN-Bus;
- Fig. 4: das Format des Remote Frame-Übertragungsrahmens beim CAN-Bus;
- Fig. 5: ein Blockschaltbild einer CAN-Bus-Schnittstelle, die mit einem Überwachungsmodul gemäß der Erfindung ausgestattet ist;
- Fig. 6: ein Flussdiagramm für ein Programm, das als Überwachungsmodul auf der CAN-Busschnittstelle installiert ist; und
- Fig. 7: ein Ablaufdiagramm für eine Variante der Angriffserkennung.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern.

Der CAN-Bus wurde bereits 1994 erstmals standardisiert. Die entsprechende ISO-Norm hat die Nummer ISO 11898. Es gibt eine Norm für den Highspeed-Bereich bis 1 Mbit/s, das ist die Norm ISO 11898-2. Dann gibt es eine Norm für den Lowspeed-Bereich bis 125 kBit/s, das ist die Norm ISO 11898-3. Durch das anwachsende Datenaufkommen ergeben sich immer höhere Buslasten auf den CAN-Bussen. Dies führte zu einer Weiterentwicklung des CAN-Busses. Der erweiterte CAN-Bus ist unter dem Begriff CAN FD-Bus bekannt. FD steht dabei für Flexible Data Rate. Bei dieser CAN-Bus Variante wird die Datenrate umgeschaltet. Für die Arbitrierungsphase bleibt die Rate niedrig, wie beim klassischen CAN-Bus. Für die Übertragung der Nutzdaten wird auf eine höhere Datenrate umgeschaltet. Überträgt man die Nutzdaten einer CAN-FD-Botschaft schneller, so verkürzt sich die Dauer der Busbelegung und die Buslast verringert sich. Wenn die Übertragungsdauer im gleichen Rahmen bleibt wie bei den klassischen CAN-Botschaften, könnten größere Datenmengen mit einer CAN-FD-Botschaft transportiert werden. So wurde es auch bei CAN FD realisiert. Statt des 8 Byte langen Nutzdatenfeldes wird bei CAN FD ein bis zu 64 Byte langes Nutzdatenfeld eingesetzt. Die Datenrate steigt für die Übertragung des Nutzdatenfeldes bei einer Umsetzung z.B. von 500 kbit/s auf 2 Mbit/s an.

Es gibt beim klassischen CAN-Bus auch ein spezielles CAN Remote Frame Format. Der CAN Remote Frame wird von einer Station gesendet, um bestimmte Daten von einer anderen Station anzufordern.

Bei der nachfolgenden Beschreibung des Ausführungsbeispiels werden die Busstationen, wie im Kfz-Bereich üblich, als Steuergeräte bezeichnet. Es ist aber auch möglich, dass eine Busstation nicht als Steuergerät ausgelegt ist. Als Beispiele werden bestimmte Sensoren oder Aktoren (z.B. Stellglieder) genannt, die an den Bus angeschlossen werden.

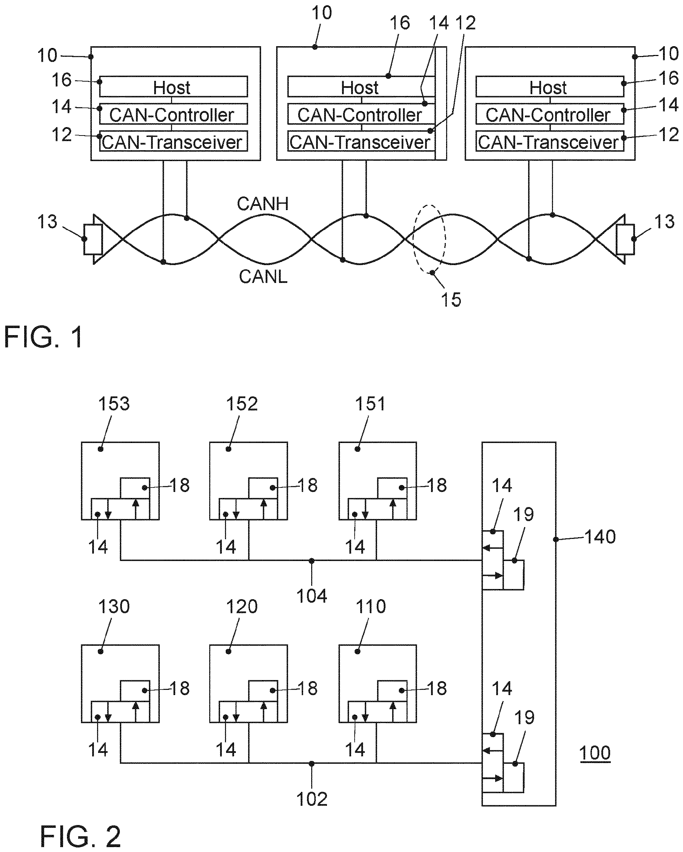

Fig. 1 zeigt das Prinzip der Vernetzung von elektronischen Komponenten mittels CAN-Bus. Ein CAN-Netzwerk ist ein Systemverbund aus CAN-Knoten mit CAN-Schnittstelle (elektronische Komponenten wie z.B. Steuergeräte, Sensoren, Aktoren) , die über ihre jeweiligen CAN-Schnittstellen und ein alle CAN-Schnittstellen verbindendes Übertragungsmedium (CAN-Bus) untereinander Daten austauschen. Es sind drei CAN-Knoten 10 dargestellt. Die Busstruktur des CAN-Bus ist linear. Es gibt daher eine Busleitung 15, an die alle drei CAN-Knoten 10 angeschlossen sind. Als Busleitung 15 wird in den häufigsten Einsatzfällen eine verdrillte, ungeschirmte Zweidrahtleitung (Unshielded Twisted Pair - UTP) genutzt, über die eine symmetrische Signalübertragung erfolgt. Bei der symmetrischen Signalübertragung werden die Signale als Spannungsdifferenzen über zwei Leitungen übertragen. Das Leitungspaar setzt sich dabei aus einer nicht invertierten CANH und einer invertierten Signalleitung CANL zusammen. Aus der Differenz der auf diesen beiden Leitern anliegenden Signale rekonstruieren die Empfänger das ursprüngliche Datensignal. Dies hat den Vorteil, dass sich Gleichtaktstörungen, die auf beiden Leitern der Busleitung 15 auftreten, durch die Differenzbildung weglöschen und sich so nicht auf die Übertragung auswirken.

Um Signalreflektionen zu vermeiden ist die Busleitung 15 an beiden Leitungsenden mit einem Abschlusswiderstand 13 der Größe des Wellenwiderstandes der Busleitung (120 Ohm) abgeschlossen.

Eine CAN-Schnittstelle setzt sich aus zwei Teilen zusammen: der Kommunikationssoftware und der Kommunikationshardware. Während die Kommunikationssoftware höhere Kommunikationsdienste umfasst, sind die grundlegenden Kommunikationsfunktionen typischerweise in Hardware implementiert: Hier werden zwei Hardware-Komponenten unterschieden: Der CAN-Controller 14 sorgt für die einheitliche Abwicklung des CAN-Kommunikationsprotokolls, und entlastet dadurch den Host 16, auf dem die bereits erwähnte Kommunikationssoftware läuft. Der CAN-Transceiver 12 sorgt für die Ankopplung des CAN-Controllers 14 an den CAN-Bus 15. Er formt die Signale für die Datenübertragung beim Sendevorgang und macht die Signalaufbereitung im Empfangsfall.

Fig. 2 zeigt den typischen Aufbau eines Kommunikationsnetzwerkes eines modernen Kraftfahrzeuges. Mit der Bezugszahl 151 ist ein Motorsteuergerät bezeichnet. Die Bezugszahl 152 entspricht einem Wählhebel-Steuergerät und die Bezugszahl 153 bezeichnet ein Getriebe-Steuergerät. Weitere Steuergeräte, wie ein zusätzliches Fahrdynamik-Steuergerät (für Fahrzeuge mit elektrisch verstellbaren Dämpfern), Airbag-Steuergerät usw., können im Kraftfahrzeug vorhanden sein. Die Vernetzung solcher Steuergeräte, die alle der Kategorie des Antriebsstrangs zugerechnet werden, geschieht typischerweise mit dem CAN-Bussystem (Controller Area Network) 104, welches als ISO Norm standardisiert ist, meist als ISO 11898-1. Für verschiedene Sensoren im Kraftfahrzeug, die nicht mehr nur an einzelne Steuergeräte angeschlossen werden sollen, ist es ebenfalls vorgesehen, dass sie an das Bussystem 104 angeschlossen werden und deren Sensordaten über den Bus zu den einzelnen Steuergeräten übertragen werden. Beispiele von Sensoren im Kraftfahrzeug sind Raddrehzahlsensoren, Lenkwinkelsensoren, Beschleunigungssensoren, Drehratensensoren, Reifendrucksensoren, Abstandssensoren, Klopfsensoren, Luftgütesensoren usw. Mit der Wählhebel-Bedienvorrichtung, die mit dem Wählhebel-Steuergerät verbunden ist, kann der Fahrer Fahrmodi anwählen. Darunter fallen Gangwahl und Motoreinstellungen wie Sport-Modus, Normal-Modus, Allradantrieb, usw.

Das moderne Kraftfahrzeug kann aber noch weitere Komponenten aufweisen, wie Videokameras, z.B. als Rückfahrkamera oder als Fahrerüberwachungskamera. Im Kraftfahrzeug befinden sich dann auch noch weitere elektronische Vorrichtungen. Diese sind mehr im Bereich der Fahrgastzelle angeordnet und werden oft auch von dem Fahrer bedient. Beispiele sind eine Benutzerschnittstellenvorrichtung, mit der der Fahrer Einstellungen vornehmen kann, aber auch klassische Komponenten bedienen kann. Darunter fallen die Blinker-Steuerung, Scheibenwischersteuerung, Lichtsteuerung, Audioeinstellungen für das Radio, andere Einstellungen für das Autotelefon, Navigationssystem usw. Diese Benutzerschnittstellenanordnung ist mit der Bezugszahl 130 versehen. Die Benutzerschnittstellenanordnung 130 ist oft auch mit einem Dreh/Druckschalter ausgestattet, über den der Fahrer die verschiedenen Menüs anwählen kann, die auf einem Display im Cockpit angezeigt werden. Andererseits fällt auch ein berührungsempfindliches Display in diese Kategorie. Selbst die Spracheingabe für die Bedienungsunterstützung fällt in diesen Bereich.

Das Navigationssystem hat die Bezugszahl 120, welches ebenfalls im Bereich des Cockpits verbaut wird. Die Route, welche auf einer Karte angezeigt wird, kann natürlich ebenfalls auf dem Display im Cockpit dargestellt werden. Weitere Komponenten, wie eine Freisprecheinrichtung, können vorhanden sein, sind aber nicht näher dargestellt. Die Bezugszahl 110 bezeichnet noch eine On-Board Unit. Diese On-Bord Unit 110 entspricht einem Kommunikationsmodul, über das das Fahrzeug mobile Daten empfangen und senden kann. Typischerweise handelt es sich hier um ein Mobilfunk-Kommunikationsmodul, z. B. nach dem LTE-Standard. All diese Geräte sind dem Infotainment-Bereich zuzuordnen. Sie werden deshalb über ein auf die speziellen Bedürfnisse dieser Gerätekategorie ausgelegtes Bussystem 102 vernetzt. Im gezeigten Beispiel wird davon ausgegangen, dass auch das Bussystem 102 in einer Variante des CAN-Bus realisiert wurde. In Frage käme der schon erwähnte CAN FD-Bus, da dort Daten mit höherer Datenrate transportiert werden können, was für die vernetzten Steuergeräte im Infotainment-Bereich von Vorteil ist.

Oft wird für den Infotainment-Bereich ein anderes Bussystem eingesetzt. Es wird diesbezüglich auf die Bussysteme AVB (Audio Video Bridging), den MOST Bus (Media Oriented System Transport) oder den D2B Bus (Domestic Digital Bus) als Beispiel hingewiesen. Zu dem Zweck, dass fahrzeugrelevante Sensordaten über die Kommunikationsschnittstelle 110 zu einem anderen Fahrzeug oder zu einem externen Zentralrechner einer Datenbank übertragen werden sollen, ist das Gateway 140 vorgesehen. Dieses ist mit beiden verschiedenen Bussystemen 102 und 104 verbunden. Das Gateway 140 ist dazu ausgelegt, die Daten, die es über den CAN-Bus 104 empfängt, so umzusetzen, dass sie in das Übertragungsformat des Infotainment-Busses 102 umgesetzt werden, so dass sie in den dort spezifizierten Paketen verteilt werden können. Für die Weiterleitung dieser Daten nach extern, also zu einem anderen Kraftfahrzeug oder zu dem Zentralrechner, ist die On-Board-Unit 110 mit der Kommunikationsschnittstelle dazu ausgerüstet, diese Datenpakete zu empfangen und wiederum in das Übertragungsformat des entsprechend eingesetzten Mobilfunkstandards umzusetzen. Eine Umsetzung ist ebenfalls erforderlich, wenn der Bus 102 als CAN FD-Bus realisiert wird.

Wie in Fig. 2 dargestellt, wird in jedem der an den jeweiligen CAN-Bus 102, 104 angeschlossenen Steuergeräte ein Überwachungsmodul 18 vorgesehen.

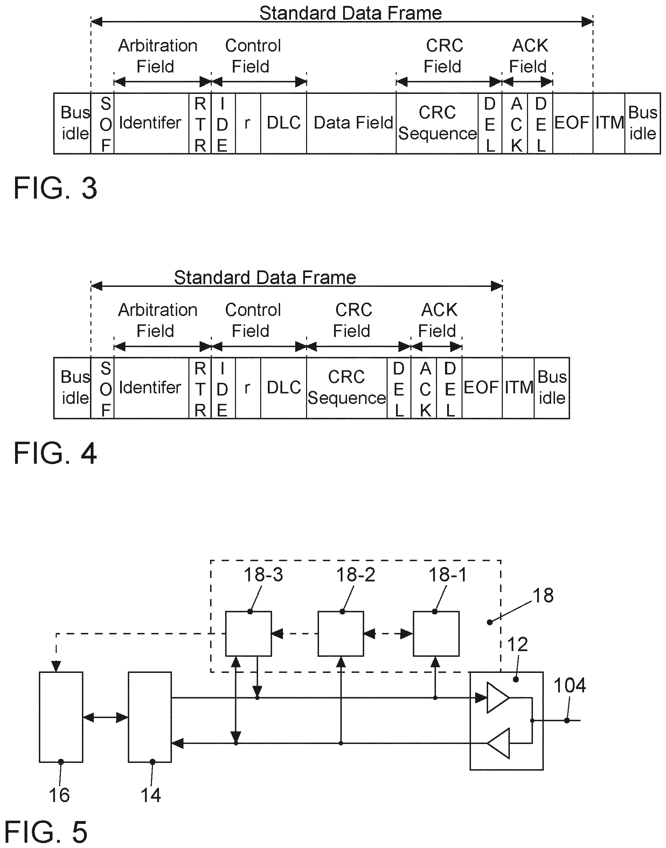

Fig. 3 zeigt das Botschaftsformat eines CAN Standard Frames. Genauer gesagt, veranschaulicht Fig. 3 ein CAN-Übertragungsrahmenformat gemäß dem CAN-Kommunikationsstandard.

Es sind viele verschiedene einzelne Bits im Übertragungsrahmen nach ISO 11898-1 vorhanden, die Steuerungszwecke erfüllen. Die verschiedenen Felder und Steuerungsbits des Übertragungsrahmens sind mit ihrer Bezeichnung in englischer Sprache in der folgenden Tabelle aufgelistet. Ebenfalls wird die Länge der einzelnen Felder angegeben. Bei der nachfolgenden Erwähnung dieser Bits wird die ausführliche Bezeichnung nicht mehr wiederholt.

| Control Bit | Ausführliche Bezeichnung | Länge |
|---|---|---|
| SOF | Start of Frame | 1 Bit |
| Identifier | Identifier | 9 Bits |
| RTR | Remote Transmission Request | 1 Bit |
| IDE | Identifier Extension | 1 Bit |
| r | Reserved Bit | 1 Bit |
| DLC | Data Length Code | 4 Bit |
| Data Field | Data Field | 0-8 Bytes |
| CRC | CRC Sequence | |
| DEL | CRC Delimiter | 1 Bit |
| ACK | Acknowledge | 1 Bit |
| DEL | ACK Delimiter | 1 Bit |
| EOF | End of Frame Code | 4 Bit |

Ein CAN-Frame enthält ein Start-of-Frame (SOF) -Feld, ein Arbitrationsfeld, ein Steuerfeld, ein Datenfeld, ein Cyclic Redundancy Check (CRC) Feld, ein ACK-Feld, ein End-of-Frame (EOF ) und eine Intermission Sequence (ITM) Feld.

Gemäß einer beispielhaften Ausführungsform der Erfindung ist das SOF-Feld ein Feld, das den Beginn eines CAN-Rahmens anzeigt, d.h. den Beginn einer Nachricht. Das Arbitrierungsfeld identifiziert eine Nachricht und weist der Nachricht eine Priorität zu. Gemäß der Länge eines in dem Arbitrierungsfeld zugeordneten Identifikationsfeldes wird der CAN-Rahmen in ein Standardformat und ein erweitertes Format aufgeteilt (gezeigt ist das Standardformat). Im Standardformat hat das Arbitrierungsfeld eine Länge von 11 Bits. Für das erweiterte Format beträgt die Länge des Identifikationsfeldes im Arbitrierungsfeld 29 Bits.

Der Identifizierer legt die Priorität des Datenrahmens fest und sorgt zusammen mit der Akzeptanzfilterung für die in der Kommunikationsmatrix definierten Sender-Empfänger-Relationen im CAN-Netzwerk. In der Kommunikationsmatrix ist für jedes Steuergerät festgelegt, welche Botschaften es verarbeitet. Wenn also eine Botschaft eingeht, dessen Botschafts-Identifizierer nicht dort aufgelistet ist, wird diese Botschaft durch die Akzeptanzfilterung aussortiert und nicht an die Applikation weitergeleitet.

Mittels des RTR-Bit teilt die Sendestation den Empfängern den Frametyp (Data Frame oder Remote Frame) mit. Ein dominantes RTR-Bit zeigt einen Data Frame an, entsprechend ein rezessives Bit den Remote Frame. Zusätzlich kann das Arbitrierungsfeld ein Identifikationserweiterungsfeld (IDE) mit einer Länge von 1 Bit enthalten, um zu identifizieren, ob ein Rahmen das Standardformat oder das erweiterte Format hat. Wenn der Wert des IDE-Feldes 0 ist, zeigt dies das Standardformat an. Wenn der Wert 1 ist, bedeutet dies das erweiterte Format.

In dem DLC-Feld wird den Empfängern die Anzahl der in der Botschaft enthaltenen Nutzdaten-Bytes angezeigt. Transportiert werden die Nutzdaten-Bytes im Data Field. Maximal können mit einem Data Frame acht Nutzdaten-Bytes übertragen werden, bzw. bis zu 64 Bytes bei CAN-FD. Gegen Übertragungsfehler werden die Nutzdaten-Bytes mithilfe einer im CRC-Feld übertragenen Prüfsumme unter Anwendung des Cyclic Redundancy Checks abgesichert.

Ausgehend vom Ergebnis des CRC Checks quittieren die Empfänger im ACK-Slot positiv oder negativ den Empfang. Dabei wird ein ACK-Bit am Ende der Nachricht durch die CAN-Controller übertragen, die die Nachricht genau empfangen haben. Der Knoten, der die Nachricht gesendet hat, prüft, ob das ACK-Bit auf dem CAN-Bus vorhanden ist oder nicht. Wenn ACK nicht gefunden wird, ist dies ein Indiz, dass ein Knoten die Nachricht nicht korrekt empfangen konnte und die Sendestation kann eine erneute Übertragung versuchen.

Beendet wird die Übertragung eines Daten-Rahmens mit sieben rezessiven Bits, das entspricht dem End Of Frame Code EOF.

Fig. 4 zeigt noch das Botschaftsformat eines CAN Remote Frames. Mit dem Remote Frame kann ein Steuergerät gewünschte Nutzdaten anfordern, wenn diese nicht sowieso zyklisch gesendet werden. Bei Anwendungen im Automobil kommt dieser Rahmentyp kaum zur Anwendung, da dort die Datenübertragung nicht auf Nachfrage, sondern im Wesentlichen zyklisch erfolgt.

Bis auf das fehlende Datenfeld entspricht der Aufbau des Remote Frames dem des Data Frames. Die Unterscheidung zwischen Data und Remote Frame erfolgt mittels des RTR-Bit. Im Falle eines Data Frames wird das RTR-Bit dominant gesendet. Ein Remote Frame ist durch ein rezessives RTR-Bit gekennzeichnet.

Prinzipiell können für alle existierenden Data Frames im CAN-Netzwerk entsprechende Remote Frames definiert werden. Dazu hat man nur darauf zu achten, dass die Identifier der Remote Frames den Identifiern der assoziierten Data Frames entsprechen. Sobald ein CAN-Knoten einen Remote Frame empfängt, dessen Identifizierer mit einem Identifizierer in der eigenen Kommunikationsmatrix identisch ist, antwortet er mit dem entsprechenden Standard Frame.

Die Fig. 5 zeigt jetzt eine mögliche Implementierung des Überwachungsmoduls 18 in Form eines Softwaremoduls bei einem Steuergerät. Die CAN-Schnittstelle des Steuergerätes besteht aus den Komponenten CAN-Transceiver 12 und CAN-Controller 14. Mit der Bezugszahl 16 ist wiederum die Host-Hard- und Software des Steuergerätes bezeichnet. Das Überwachungsmodul 18 wird mit Hilfe von Software implementiert und besteht aus den drei Komponenten Protokolleinheit 18-1, Detektor-Einheit 18-2 und Logikeinheit 18-3.

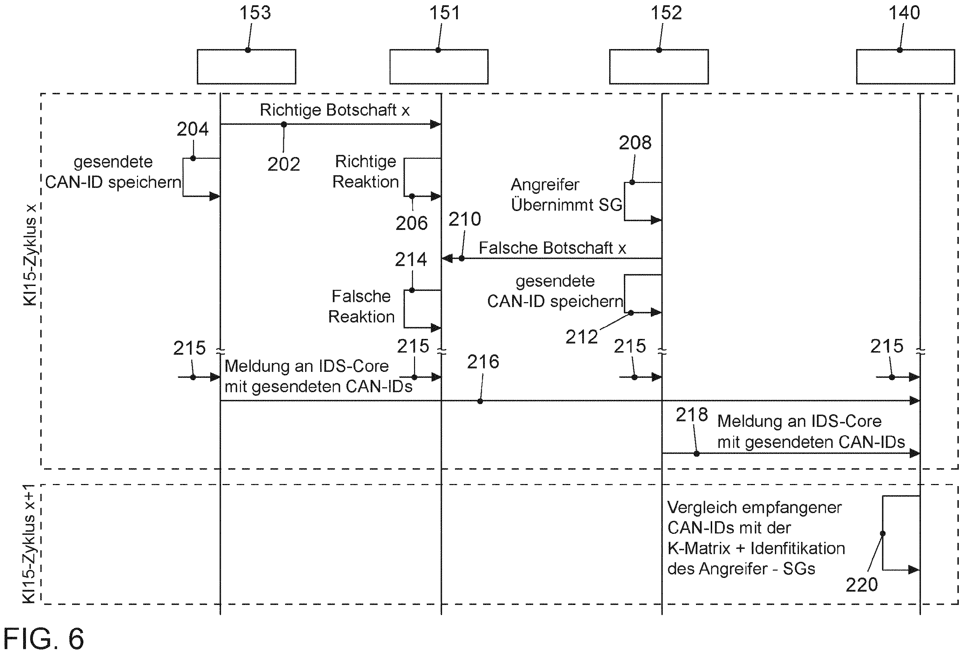

Im Folgenden werden zwei verschiedene Varianten erläutert, mit denen eine Angriffserkennung bei der Bordelektronik 100 des in Fig. 2 gezeigten Beispiels durchgeführt werden kann. Die Variante gemäß Fig. 6 entspricht einer zyklischen Angriffserkennung. In dem gezeigten Fall wird die Zykluszeit an die Betriebsphase des Fahrzeuges gekoppelt. Bei Fahrzeugen betrifft die Betriebsphase einem sogenannten Klemme 15-Zyklus. Diese Bezeichnung stammt traditionell noch von den Anfängen der Kfz-Technik. Mit Klemme 15 wird traditionell noch der geschaltete Pluspol der Batterie bezeichnet. Durch Drehen des Zündschlüssels fand dieser Schaltvorgang statt. Bei modernen Fahrzeugen gibt es häufig einen Start-Knopf, der ebenfalls die Stromversorgung einschaltet. Allerdings bleiben einige Geräte weiterhin an die Stromversorgung angeschlossen, obwohl der Normalmodus durch nochmaliges Drücken des Start-Knopfes beendet wurde. Solche Geräte wechseln dann z.B. von dem Normalmodus in den Standbymodus, in dem sie weniger Strom verbrauchen, jedoch noch Aufgaben wahrnehmen. Als Beispiel wird ein Karosseriesteuergerät genannt, das im Standbymodus auf den Empfang eines Funksignals von einem Funkschlüssel wartet, um dann die Türen zu entriegeln, wenn das Funksignal eintrifft.

Die Fig. 6 zeigt von oben nach unten zwei aufeinander folgende Klemme 15 Zyklen. Bei dem Kl15-Zyklus x sind verschiedene Nachrichtenübertragungen zwischen den Steuergeräten im Antriebsstrang dargestellt. Oben sind von links nach rechts die Steuergeräte Getriebesteuergerät 153, Motorsteuergerät 151, manipuliertes Wählhebelsteuergerät 152 und Gateway 140 bezeichnet. Zunächst findet eine Nachrichtenübertragung über den CAN-Bus 104 von dem Getriebesteuergerät 153 zu dem Motorsteuergerät 151 im Schritt 202 statt. Es handelt sich um eine reguläre Botschaft, die in dem Format des Standard-Datenrahmens, wie in Fig. 3 gezeigt, gesendet wird. Diese Botschaft wird von dem Motorsteuergerät 151 übernommen, weil sie durch den Vorgang der Akzeptanzfilterung als für das Motorsteuergerät 151 relevant erkannt wurde. Seitens des Motorsteuergerätes 151 findet die entsprechende richtige Reaktion auf den Eingang dieser Botschaft in dem Schritt 206 statt. Wenn es sich um wichtige Messdaten handelt, können sie im Speicher abgelegt werden und das Steuerprogramm, das im Host 16 abläuft greift darauf zu, um eine Steuerfunktion auszuführen, die unter Berücksichtigung dieser Messdaten stattfinden soll. Gleichzeitig wird von Seiten der Protokolleinheit 18-1 der CAN-Schnittstelle ein Eintrag in einer Liste über die stationseigenen CAN-Identifizierer gesetzt. Dies erfolgt im Schritt 204. Diese Liste wird nach und nach vervollständigt, je mehr Botschaften von dem Getriebesteuergerät 153 gesendet werden. Mit dieser Liste wird bezweckt, ein Angreifer-Steuergerät nachträglich zu entlarven. Dafür muss aber auch das Angreifer-Steuergerät eine Liste aufbauen. Eine vor Manipulationen besser gesicherte Variante besteht darin, dass das jedes Steuergerät, auch das Angreifer-Steuergerät, mit einem entsprechend ausgelegten Hardware-Baustein ausgestattet sein muss, der diese Protokoll-Einheit enthält. Dafür kommt eine entsprechende Implementierung in einem Hardware-Block in Betracht, der in dem CAN-Transceiver oder dem CAN-Controller integriert wird. Das Angreifer-Steuergerät ist im gezeigten Beispiel ein manipuliertes Wählhebel-Steuergerät 152. Im Schritt 208 bekommt das Angreifer-Steuergerät den Befehl, eine gefälschte Botschaft auf den CAN-Bus 104 zu senden. Dies kann auch durch ein manipuliertes Steuerprogramm ausgelöst werden, wobei dafür detaillierte Kenntnisse über das serienmäßige Steuerprogramm erforderlich wären. Im Schritt 210 sendet das Angreifer-Steuergerät 152 die gefälschte Botschaft auf den CAN-Bus 104. Das Motorsteuergerät 151 übernimmt die gefälschte Botschaft, weil sie dessen Akzeptanzfilterung passiert. Im Schritt 214 erfolgt eine falsche Reaktion von Seiten des Motorsteuergerätes 151. Dies kann dadurch bewirkt werden, dass das Steuerprogramm mit dem gefälschten übertragenen Messwert oder Parameterwert rechnet. Es können in der Folge noch weitere reguläre und gefälschte Botschaften über den CAN-Bus 104 übertragen werden, die nicht näher betrachtet werden. Im Schritt 215 erfolgt schließlich ein Klemme 15-Ereignis. Damit wird die Bordelektronik 100 abgeschaltet. Es findet aber keine sofortige Abschaltung statt. Die Steuergeräte werden kontrolliert "runtergefahren" und erledigen dabei noch einige Aufgaben wie die Abspeicherung eingestellter Parameter oder das Rücksetzen bestimmter eingestellter Parameter, etc. Die nachfolgenden Schritte 216 und 218 entsprechen solchen Schritten, die im Zusammenhang mit dem Runterfahren der Steuergeräte 153 und 152 stattfinden. Im Schritt 216 meldet das Getriebesteuergerät 153 seine mitprotokollierte Liste der von ihm in Botschaften versendeten CAN-Identifizierer an eine übergeordnete Überwachungsinstanz. Diese Überwachungsinstanz ist vorzugsweise in einem zentralen Netzwerkknoten untergebracht. Dafür bietet sich bei der Bordelektronik 100 von Fahrzeugen das Gateway 140 an. Die Botschaft mit der Liste der benutzten CAN-Identifizierer wird über den CAN-Bus 104 an das Gateway 140 gesendet. Da das Nutzdatenfeld in dem Standard Datenrahmen begrenzt ist, müssen dafür mehrere CAN-Botschaften übertragen werden. Jede dieser Botschaften, die ein Teil der protokollierten CAN-Identifizierer überträgt, enthält auch eine Kennung des sendenden Steuergerätes. Diese Kennung kann in einer Variante den Typ des Steuergerätes angeben. Also bei dem Getriebesteuergerät 153 wird als Kennung die Information eingetragen, dass die Botschaft die CAN-Identifizierer eines Getriebesteuergerätes überträgt. Die gleiche Meldung wird auch von dem Angreifer-Steuergerät 152 an das Gateway 140 gesendet. Auch das Angreifer-Steuergerät 152 liefert alle mitprotokollierten CAN-Identifizierer an das Gateway 140. Da das Angreifer-Steuergerät 152 auch die CAN-Identifizierer der gefälschten Botschaften mitprotokolliert, werden diese auch an die übergeordnete Überwachungsinstanz in dem Gateway 140 geliefert. Hierauf beruht dann auch die Fähigkeit das Angreifer-Steuergerät 140 zu entlarven. Der Vorgang der Entlarvung des Angreifer-Steuergerät 140 findet im gezeigten Beispiel allerdings erst im nachfolgenden Klemme 15-Zyklus statt, also beim nächsten Startvorgang der Bordelektronik 100.

In Fig. 6 ist der nachfolgende Klemme 15-Zyklus mit Index x+1 bezeichnet. Die Auswertung der übertragenen CAN-Identifizierer-Protokolle findet in dem Schritt 220 statt. In dem Schritt 220 wird ein empfangenes CAN-Identifizierer-Protokoll mit einer in der Überwachungsinstanz archivierten Referenzliste verglichen. Die Referenzliste enthält die dem zugehörigen Steuergerät zugeordneten regulären CAN-Identifizierer. Diese Liste wird in jedem Steuergerät abgespeichert und wird zum Zweck der Akzeptanzfilterung bei Empfang einer CAN-Botschaft benutzt, um zu entscheiden, ob die Botschaft für das eigene Steuergerät relevant ist oder an ein anderes Steuergerät gerichtet ist. Die Referenzliste wird teilweise auch als K-Matrix bezeichnet, entsprechend Kommunikationsmatrix. Es muss dafür gesorgt werden, dass in der Überwachungsinstanz des Gateways 140 alle Referenzlisten des Steuergeräteverbundes in der Bordelektronik 100 vorhanden sind. Diese Referenzlisten können am Ende der Fertigung bei der Herstellung des Fahrzeuges in das Gateway 140 in einem geschützten Speicherbereich (z.B. EPROM) einprogrammiert werden. Beim Test der von der Protokolleinheit 18-1 in dem Wählhebelsteuergerät 152 mitprotokollierten Liste wird dann erkannt, dass der CAN-Identifizierer der im Schritt 210 gesendeten, gefälschten Botschaft zusätzlich mitprotokolliert wurde. Dieser CAN-Identifizierer ist in der Referenzliste nicht verzeichnet. So wird dann erkannt, dass das Wählhebelsteuergerät 152 manipuliert wurde. Anschließend werden dann durch die Überwachungsinstanz eine oder mehrere der beschriebenen Sicherungsmaßnahmen eingeleitet. Dies erfolgt so, dass von der Überwachungsinstanz im Gateway 140 eine Botschaft über den CAN-Bus 104 zu dem Angreifer-Steuergerät 152 gesendet wird. Dafür ist in jedem Steuergerät die Logikeinheit 18-3 vorgesehen. Die Logikeinheit 18-3 im Wählhebelsteuergerät 152 empfängt die Botschaft mit der Sicherungsmaßnahme von dem Gateway 140. Die Logikeinheit kann entweder über eine direkte Signalleitung mit dem Host 16 in Verbindung stehen und dem Host einen Befehl zum Abschalten oder zum Einleiten eines abgesicherten Modus senden. Es wäre alternativ möglich diesen Befehl per CAN-Botschaft zu dem CAN-Controller 14 zu liefern. Eine andere Sicherungsmaßnahme besteht in dem Auslösen eines Bus-Off-Zustandes seitens der Logikeinheit. Damit wird dann die Verbindung zum Can-Bus 104 unterbrochen.

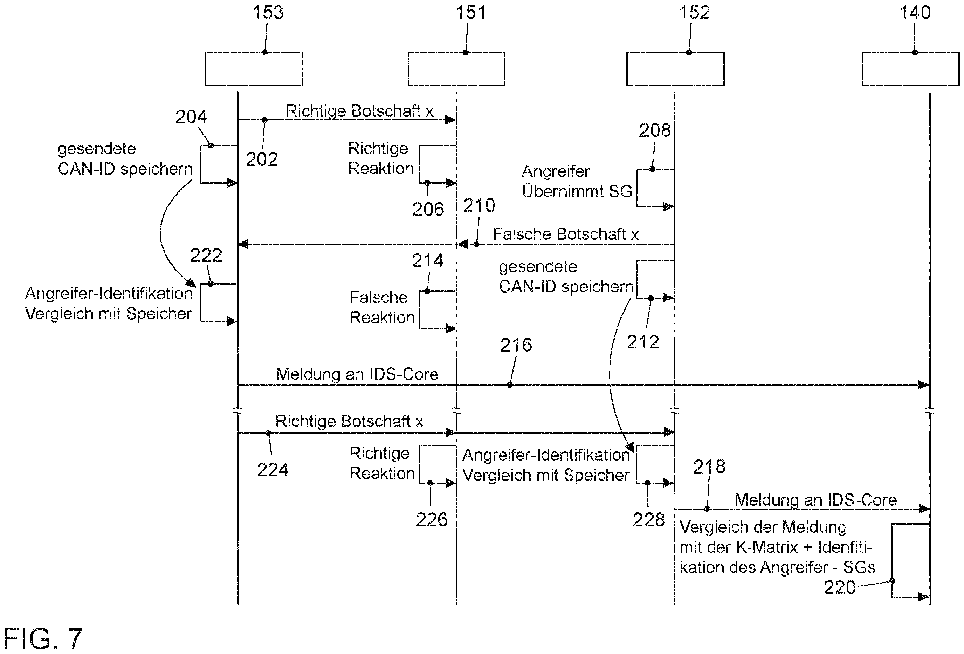

In Fig. 7 ist noch eine andere Variante der Angriffserkennung dargestellt, die nicht Gegenstand der beanspruchten Erfindung ist. Gleiche Bezugszahlen bezeichnen dieselben Komponenten, wie zuvor erläutert. Der Unterschied besteht darin, dass damit eine sofortige Angriffserkennung realisiert wird. Dafür ist es erforderlich, dass die Steuergeräte selber einen Vergleich mit der von der Protokolleinheit 18-1 erstellten Liste durchführen. Dies erfolgt auch dann, wenn die Liste noch unvollständig ist. Der Vergleich mit der protokollierten Liste wird in der Detektoreinheit 18-2 durchgeführt. Es wird bei jeder eingehenden Botschaft ein Vergleich des in der Botschaft enthaltenen CAN-Identifizierers mit der protokollierten Liste durchgeführt. Dieser Vergleich findet in dem Getriebesteuergerät 153 im Schritt 222 erstmalig statt, nachdem die gefälschte Botschaft von dem Angreifer-Steuergerät 152 im Schritt 210 gesendet wurde. Das Ergebnis des Vergleichs ist eine Übereinstimmung mit einem Eintrag in der im Getriebesteuergerät 153 mitprotokollierten Liste. Immer, wenn eine Übereinstimmung erkannt wurde, bedeutet dies wegen der existierenden Eindeutigkeitsregel, dass ein potentieller Angriff erkannt wurde. Dies wird dann im Schritt 216 sofort an die Überwachungsinstanz im Gateway 140 gemeldet. In diese Meldung wird wiederum die Kennung für das meldende Steuergerät eingetragen sowie der CAN-Identifizierer der eingegangenen Botschaft, bei dem die Übereinstimmung erkannt wurde. Die Überwachungsinstanz kann damit aber noch nicht das Angreifer-Steuergerät identifizieren. Diese Frage klärt sich erst, wenn das integere Steuergerät nochmals eine reguläre Botschaft mit dem verdächtigen CAN-Identifizierer versendet. Dies erfolgt im Schritt 224 durch das Getriebesteuergerät 153. In dem Wählhebelsteuergerät 152 wird dann im Schritt 228 erkannt, dass ein identischer CAN-Identifizierer eingegangen ist, der auch in der von der stationseigenen Protokolleinheit 18-1 geführten Liste verzeichnet ist. Somit erfolgt im Schritt 218 auch eine Meldung an die Überwachungsinstanz in dem Gateway 140 mit Angabe des verdächtigen CAN-Identifizierers und der Steuergeräte-Kennung des Wählhebelsteuergerätes 152. Sodann liegen in der Überwachungsinstanz zwei Meldungen vor, eine von dem regulären Steuergerät und eine von dem Angreifer-Steuergerät 152. Diese Information reicht aus um das Angreifer-Steuergerät 152 zu identifizieren. Dazu findet in dem Schritt 220 in der Überwachungsinstanz ein Vergleich der dort vorliegenden Referenzlisten mit dem verdächtigem CAN-Identifizierer statt. Es wird eine reguläre Referenzliste geben, in der der CAN-Identifizierer verzeichnet ist. Wenn diese Referenzliste gefunden wurde, kann die Überwachungsinstanz ermitteln welche Steuergeräte-Kennung zu dieser Referenzliste passt. Die Meldung mit dieser Steuergeräte-Kennung stammte dann von dem integeren Steuergerät. Damit ist dann aber gleichzeitig das Angreifer-Steuergerät entlarvt. Es ist das Steuergerät von dem die andere Meldung stammt. Es werden anschließend ebenfalls wieder eine oder mehrere Sicherungsmaßnahmen gegen das identifizierte Angreifer-Steuergerät eingeleitet. Alternativ könnte in der Überwachungsinstanz auch eine Zuordnungsliste gespeichert werden, in der für die einzelnen CAN-Identifizierer die regulären Steuergeräte-Kennungen verzeichnet sind. Dann würde die aufwendige Suche nach der passenden Referenzliste entfallen.

Es wird noch erwähnt, dass bereits aus der Anzahl der gespeicherten Einträge in der von der Protokolleinheit geführten Liste auf einen Angriff geschlossen werden könnte.

Es wird noch erwähnt, dass die Listen, die von der Protokolleinheit geführt werden gegen einen Speicherüberlauf gesichert werden sollten, um einen Angriff mit durch Überflutung des CAN-Busses mit vielen unterschiedlichen CAN-IDs beherrschen zu können.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Es gibt verschiedene Varianten für die Implementierung der beschriebenen Lösung für die Angreifer-Identifizierung:
1. Software-Lösung bei der die Module Protokolleinheit, Detektoreinheit und Logikeinheit als Teil der Schnittstellen-Software im Steuergerät installiert wird.
2. Software-Lösung, die in einem zusätzlichen Hardware-Security-Modul, installiert wird.
3. Hardware-Lösung die im CAN-Transceiver- oder CAN-Controller-Chip mitintegriert wird.

Von diesen Implementierungsvarianten können die beiden letztgenannten Implementierungsarten als relativ sicher vor Manipulationen eingestuft werden.

Das beschriebene Überwachungsverfahren ließe sich auch bei anderen Bussystemen als dem CAN-Bus einsetzen. Besonders erwähnt wird noch der LIN Bus (Local Interconnect Bus) als Beispiel. Bei dem LIN-Bus handelt es sich aber um einen Master/Slave-Bus bei dem im Botschaftsformat ebenfalls ein Identifizierer vorgesehen ist, der aber auch einen bestimmten Steuerbefehl kennzeichnen kann.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

### Bezugszeichenliste

- 10: CAN-Knoten
- 12: CAN-Transceiver
- 13: Abschlusswiderstand
- 14: CAN-Controller
- 15: Busleitung
- 16: Host
- 18: Überwachungsmodul
- 18-1: Protokolleinheit
- 18-2: Detektoreinheit
- 18-3: Logikeinheit
- 19: Überwachungsinstanz
- 100: Kfz-Elektronik
- 102: Infotainment-CAN-Bus
- 104: CAN-Bus
- 110: On-Board Unit
- 120: Navigationssystem
- 130: Bedienungseinheit
- 140: Gateway
- 151: Motor-Steuergerät
- 152: Wählhebelsteuergerät
- 153: Getriebe-Steuergerät
- 202 - 228: verschiedene Schritte eines Verfahrens zur Angriffserkennung

## Patentansprüche

1. Verfahren zur Überwachung der Kommunikation auf einem Kommunikationsbus (104), wobei durch den Kommunikationsbus (104) eine Anzahl von elektronischen Stationen (151, 152, 153) vernetzt sind, wobei die über den Kommunikationsbus (104) übertragenen Botschaften mit einem Identifizierer gekennzeichnet sind, wobei für jede Station (151, 152, 153) festgelegt ist, welche Botschaften mit welchem Identifizierer von der Station (151, 152, 153) gesendet werden dürfen, wobei eine Eindeutigkeitsregel gilt, die verbietet, dass eine andere Station (152, 153) eine Nutzdaten-Botschaft mit einem Identifizierer versendet, der schon für diese Station (151) reserviert ist, und wobei von einer Protokolleinheit (18-1) in einer Station (151, 152, 153) eine Liste geführt wird über die Identifizierer der von der Station (151, 152, 153) tatsächlich gesendeten Botschaften, **dadurch gekennzeichnet, dass** die Liste an eine an den Kommunikationsbus (104) angeschlossene zentrale Überwachungsstation (140) gesendet wird mit einer Botschaft, die einen Eintrag für eine Kennung der sendenden Station (151, 152, 153) beinhaltet, wobei von einer in der zentralen Überwachungsstation (140) installierten übergeordneten Überwachungsinstanz ein Vergleich der in der Liste verzeichneten Identifizierer mit einer Tabelle vorgenommen wird, in der die Kennungen bzgl. der Identifikation der Stationen (151, 152, 153) und Referenzlisten mit den pro Station (151, 152, 153) zugeordneten Identifizierern verzeichnet sind, die in Botschaften von der die Liste sendende Station (151, 152, 153) versendet werden dürfen.

2. Verfahren nach Anspruch 1, wobei die Protokolleinheit (18-1) die Liste sukzessive aufbaut, indem ein neuer Listeneintrag generiert wird, wenn von der Station (151, 152, 153) eine Botschaft mit einem Identifizierer verschickt wird, der zuvor noch nicht in die Liste eingetragen wurde.

3. Verfahren nach Anspruch 1 oder 2, wobei die Nachricht mit der protokollierten Liste an die an den Kommunikationsbus (104) angeschlossene zentrale Überwachungsstation (140) gesendet wird, wenn ein Ende eines Arbeitszyklus erkannt wird.

4. Verfahren nach einem der vorhergehenden Ansprüche, wobei von einer Sendeeinheit der zentralen Überwachungsstation (140) eine Sicherungsbotschaft mit einer Sicherungsmaßnahme an diejenige Station (151, 152, 153) versendet wird, deren Kennung mit der Kennung zu einer empfangenen Liste übereinstimmt, bei der die zugehörige Referenzliste keinen Eintrag für einen in der empfangenen Liste verzeichneten Identifizierer aufweist.

5. Verfahren nach Anspruch 4, wobei der Kommunikationsbus (104) nach einer Variante der Familie des CAN-Busses, entsprechend Controller Area Network-Busses ausgelegt ist und als Sicherungsmaßnahme das Auslösen des Bus-Off-Zustandes für die Station (151, 152, 153) durchgeführt wird.

6. Elektronische Station (151, 152, 153) zum Anschluss an einen Kommunikationsbus (104), wobei durch den Kommunikationsbus (104) eine Anzahl von elektronischen Stationen (151, 152, 153) vernetzt sind, wobei die über den Kommunikationsbus (104) übertragenen Botschaften mit einem Identifizierer gekennzeichnet sind, wobei für jede Station (151, 152, 153) festgelegt ist, welche Botschaften mit welchem Identifizierer von der Station (151, 152, 153) gesendet werden dürfen, wobei eine Eindeutigkeitsregel gilt, die verbietet, dass eine andere Station (152, 153) eine Nutzdaten-Botschaft mit einem Identifizierer versendet, der schon für diese Station (151) reserviert ist, und wobei die Station (151, 152, 153)eine Protokolleinheit (18-1) aufweist, die ausgelegt, ist eine Liste zu führen über die Identifizierer der von der Station (151, 152, 153) gesendeten Botschaften, **dadurch gekennzeichnet, dass** die Station (151, 152, 153) eine Logikeinheit (18-3) aufweist, die ausgelegt ist, die von der Protokolleinheit (18-1) geführte Liste an eine an den Kommunikationsbus (104) angeschlossene zentrale Überwachungsstation (140) mit einer übergeordneten Überwachungsinstanz zu versenden mit einer Botschaft, die einen Eintrag für eine Kennung der sendenden Station (151, 152, 153) beinhaltet, wobei von der übergeordneten Überwachungsinstanz ein Vergleich der in der Liste verzeichneten Identifizierer mit einer Tabelle vorgenommen wird, in der die Kennungen bzgl. der Identifikation der Stationen (151, 152, 153) und Referenzlisten mit den pro Station (151, 152, 153) zugeordneten Identifizierern verzeichnet sind, die in Botschaften von der die Liste sendende Station (151, 152, 153) versendet werden dürfen, und wobei von einer Sendeeinheit der zentralen Überwachungsstation (140) eine Sicherungsbotschaft mit einer Sicherungsmaßnahme an die Station (151, 152, 153) versendet wird, falls die zugehörige Referenzliste keinen Eintrag für einen in der empfangenen Liste verzeichneten Identifizierer aufweist, und wobei die Logikeinheit (18-3) ausgelegt ist, die Sicherungsbotschaft von der zentralen Überwachungsstation (140) zu empfangen und eine in der Sicherungsnachricht mitgeteilte Sicherungsmaßnahme durchzuführen.

7. Elektronische Station (151, 152, 153) nach Anspruch 6, wobei der Kommunikationsbus (104) nach einer Variante der Familie des CAN-Busses, entsprechend Controller Area Network-Busses ausgelegt ist und als Sicherungsmaßnahme das Auslösen des Bus-Off-Zustandes für die Station (151, 152, 153) durchgeführt wird.

8. Zentrale Überwachungsstation (140) zum Anschluss an einen Kommunikationsbus (104), wobei durch den Kommunikationsbus (104) eine Anzahl von elektronischen Stationen (151, 152, 153) vernetzt sind, wobei die über den Kommunikationsbus (104) übertragenen Botschaften mit einem Identifizierer gekennzeichnet sind, wobei für jede Station (151, 152, 153) festgelegt ist, welche Botschaften mit welchem Identifizierer von der Station (151, 152, 153) gesendet werden dürfen, wobei eine Eindeutigkeitsregel gilt, die verbietet, dass eine andere Station (152, 153) eine Nutzdaten-Botschaft mit einem Identifizierer versendet, der schon für diese Station (151) reserviert ist, und wobei von einer Protokolleinheit (18-1) in einer Station (151, 152, 153) eine Liste geführt wird über die Identifizierer der von der Station (151, 152, 153) tatsächlich gesendeten Botschaften, **dadurch gekennzeichnet, dass** die zentrale Überwachungsstation (140) ausgelegt ist, die Liste von einer Station (151, 152, 153) zu empfangen mit einer Botschaft, die einen Eintrag für eine Kennung der sendenden Station (151, 152, 153) beinhaltet, und dass die zentrale Überwachungsstation (140) eine übergeordnete Überwachungsinstanz beinhaltet, die ausgelegt ist einen Vergleich der in den Liste verzeichneten Identifizierer mit einer in der zentralen Überwachungsstation (140) vorhandenen Tabelle vorzunehmen, in der die Kennungen bzgl. der Identifikation der Stationen (151, 152, 153) des Kommunikationsbusses (104) und Referenzlisten mit den pro Station (151, 152, 153) zugeordneten Identifizierern verzeichnet sind, die in Botschaften von der die Liste sendende Station (151, 152, 153) versendet werden dürfen.

9. Zentrale Überwachungsstation (140) nach Anspruch 8, wobei die zentrale Überwachungsstation (140) eine Sendeeinheit aufweist, die ausgelegt ist, eine Sicherungsbotschaft mit einer Sicherungsmaßnahme an diejenige Station (151, 152, 153) zu versenden, deren Kennung mit der Kennung zu einer empfangenen Liste übereinstimmt, bei der die zugehörige Referenzliste keinen Eintrag für einen in der empfangenen Liste verzeichneten Identifizierer aufweist.

10. Zentrale Überwachungsstation (140) nach Anspruch 9, wobei der Kommunikationsbus (104) nach einer Variante der Familie des CAN-Busses, entsprechend Controller Area Network-Busses ausgelegt ist und als Sicherungsmaßnahme das Auslösen des Bus-Off-Zustandes für die Station (151, 152, 153) durchgeführt wird.

## Claims

1. Method for monitoring the communication on a communication bus (104), wherein the communication bus (104) networks a number of electronic stations (151, 152, 153), wherein the messages transmitted via the communication bus (104) are identified with an identifier, it being stipulated for each station (151, 152, 153) which messages with which identifier are allowed to be sent by the station (151, 152, 153), wherein an unambiguity rule prohibiting another station (152, 153) from sending a payload-data message with an identifier that is already reserved for this station (151) applies, and wherein a protocol unit (18-1) in a station (151, 152, 153) keeps a list of the identifiers of the messages actually sent by the station (151, 152, 153), **characterized in that** the list is sent to a central monitoring station (140) connected to the communication bus (104) with a message which includes an entry for an identifier of the sending station (151, 152, 153), wherein a superordinate monitoring entity installed in the central monitoring station (140) compares the identifiers recorded in the list with a table in which are recorded the identifiers regarding the identification of the stations (151, 152, 153) and reference lists containing the identifiers assigned to each station (151, 152, 153) which are allowed to be sent in messages from the station (151, 152, 153) sending the list.

2. Method according to Claim 1, wherein the protocol unit (18-1) successively builds up the list by generating a new list entry when the station (151, 152, 153) sends a message containing an identifier which was previously not yet entered into the list.

3. Method according to Claim 1 or 2, wherein the message with the protocolled list is sent to the central monitoring station (140) connected to the communication bus (104) when an end of a working cycle is detected.

4. Method according to one of the preceding claims, wherein a transmitting unit of the central monitoring station (140) sends a security message containing a security measure to that station (151, 152, 153) whose identifier matches the identifier for a received list in which the associated reference list has no entry for an identifier recorded in the received list.

5. Method according to Claim 4, wherein the communication bus (104) is designed according to a variant of the family of the CAN bus, accordingly Controller Area Network bus, and the security measure carried out is the triggering of the bus off state for the station (151, 152, 153).

6. Electronic station (151, 152, 153) for connection to a communication bus (104), wherein the communication bus (104) networks a number of electronic stations (151, 152, 153), wherein the messages transmitted via the communication bus (104) are identified with an identifier, it being stipulated for each station (151, 152, 153) which messages with which identifier are allowed to be sent by the station (151, 152, 153), wherein an unambiguity rule prohibiting another station (152, 153) from sending a payload-data message with an identifier that is already reserved for this station (151) applies, and wherein the station (151, 152, 153) has a protocol unit (18-1) which is designed to keep a list of the identifiers of the messages sent by the station (151, 152, 153), **characterized in that** the station (151, 152, 153) has a logic unit (18-3) which is designed to send the list kept by the protocol unit (18-1) to a central monitoring station (140) having a superordinate monitoring entity and connected to the communication bus (104) with a message which includes an entry for an identifier of the sending station (151, 152, 153), wherein the superordinate monitoring entity compares the identifiers recorded in the list with a table in which are recorded the identifiers regarding the identification of the stations (151, 152, 153) and reference lists containing the identifiers assigned to each station (151, 152, 153) which are allowed to be sent in messages from the station (151, 152, 153) sending the list, and wherein a transmitting unit of the central monitoring station (140) sends a security message containing a security measure to the station (151, 152, 153) if the associated reference list has no entry for an identifier recorded in the received list, and wherein the logic unit (18-3) is designed to receive the security message from the central monitoring station (140) and to carry out a security measure communicated in the security message.

7. Electronic station (151, 152, 153) according to Claim 6, wherein the communication bus (104) is designed according to a variant of the family of the CAN bus, accordingly Controller Area Network bus, and the security measure carried out is the triggering of the bus off state for the station (151, 152, 153).

8. Central monitoring station (140) for connection to a communication bus (104), wherein the communication bus (104) networks a number of electronic stations (151, 152, 153), wherein the messages transmitted via the communication bus (104) are identified with an identifier, it being stipulated for each station (151, 152, 153) which messages with which identifier are allowed to be sent by the station (151, 152, 153), wherein an unambiguity rule prohibiting another station (152, 153) from sending a payload-data message with an identifier that is already reserved for this station (151) applies, and wherein a protocol unit (18-1) in a station (151, 152, 153) keeps a list of the identifiers of the messages actually sent by the station (151, 152, 153), **characterized in that** the central monitoring station (140) is designed to receive the list from a station (151, 152, 153) with a message which includes an entry for an identifier of the sending station (151, 152, 153), and **in that** the central monitoring station (140) includes a superordinate monitoring entity which is designed to compare the identifiers recorded in the list with a table which is present in the central monitoring station (140) and in which are recorded the identifiers regarding the identification of the stations (151, 152, 153) of the communication bus (104) and reference lists containing the identifiers assigned to each station (151, 152, 153) which are allowed to be sent in messages from the station (151, 152, 153) sending the list.

9. Central monitoring station (140) according to Claim 8, wherein the central monitoring station (140) has a transmitting unit which is designed to send a security message containing a security measure to that station (151, 152, 153) whose identifier matches the identifier for a received list in which the associated reference list has no entry for an identifier recorded in the received list.

10. Central monitoring station (140) according to Claim 9, wherein the communication bus (104) is designed according to a variant of the family of the CAN bus, accordingly Controller Area Network bus, and the security measure carried out is the triggering of the bus off state for the station (151, 152, 153).

## Revendications

1. Procédé de surveillance de la communication sur un bus de communication (104), un certain nombre de stations (151, 152, 153) électroniques étant mises en réseau par le bus de communication (104), les messages transmis par le biais du bus de communication (104) étant **caractérisés par** un identificateur, une spécification étant effectuée pour chaque station (151, 152, 153) afin de définir quels messages pourvus de quels identificateurs sont autorisés à être émis par la station (151, 152, 153), une règle d'unicité s'appliquant, laquelle interdit qu'une autre station (152, 153) émette un message de données utiles pourvu d'un identificateur qui est déjà réservé pour cette station (151), et une liste à propos des identificateurs des messages effectivement émis par une station (151, 152, 153) étant tenue par une unité de protocole (18-1) dans la station (151, 152, 153), **caractérisé en ce que** la liste est émise vers une station de surveillance (140) centrale connectée au bus de communication (104) avec un message qui contient une entrée pour un identifiant de la station (151, 152, 153) émettrice, une comparaison des identificateurs enregistrés dans la liste étant effectuée par une instance de surveillance de niveau supérieur installée dans la station de surveillance (140), avec un tableau dans lequel sont enregistrés les identifiants ou l'identification des stations (151, 152, 153) et des listes de références avec les identificateurs affectés par station (151, 152, 153) dont l'émission est autorisée dans les messages de la station (151, 152, 153) qui émet la liste.

2. Procédé selon la revendication 1, l'unité de protocole (18-1) établissant la liste de manière successive en générant une nouvelle entrée de liste lorsqu'un message est envoyé par la station (151, 152, 153) avec un identificateur qui n'avait précédemment pas encore été consigné dans la liste.

3. Procédé selon la revendication 1 ou 2, le message avec la liste consignée étant émis vers la station de surveillance (140) centrale connectée au bus de communication (104) lorsqu'une fin d'un cycle de travail est reconnue.

4. Procédé selon l'une des revendications précédentes, un message de sécurité pourvu d'une mesure de sécurité étant émis par une unité d'émission de la station de surveillance (140) centrale vers la station (151, 152, 153) dont l'identifiant coïncide avec l'identifiant d'une liste à recevoir, pour laquelle la liste de référence associée ne possède aucune entrée pour un identificateur enregistré dans la liste reçue.

5. Procédé selon la revendication 4, le bus de communication (104) étant conçu selon une variante de la famille des bus CAN, conformément aux bus « Controller Area Network », et la mesure de sécurité étant réalisée sous la forme du déclenchement de l'état Bus désactivé pour la station (151, 152, 153).

6. Station (151, 152, 153) électronique destinée à la connexion à un bus de communication (104), un certain nombre de stations (151, 152, 153) électroniques étant mises en réseau par le bus de communication (104), les messages transmis par le biais du bus de communication (104) étant **caractérisés par** un identificateur, une spécification étant effectuée pour chaque station (151, 152, 153) afin de définir quels messages pourvus de quels identificateurs sont autorisés à être émis par la station (151, 152, 153), une règle d'unicité s'appliquant, laquelle interdit qu'une autre station (152, 153) émette un message de données utiles pourvu d'un identificateur qui est déjà réservé pour cette station (151), et la station (151, 152, 153) possédant une unité de protocole (18-1), laquelle est conçue pour tenir une liste à propos des identificateurs des messages effectivement émis par la station (151, 152, 153), **caractérisée en ce que** la station (151, 152, 153) possède une unité logique (18-3) qui est conçue pour émettre la liste tenue par l'unité de protocole (18-1) vers une station de surveillance (140) centrale connectée au bus de communication (104) et pourvue d'un instance de surveillance de niveau supérieur avec un message qui contient une entrée pour un identifiant de la station (151, 152, 153) émettrice, une comparaison des identificateurs enregistrés dans la liste étant effectuée par l'instance de surveillance de niveau supérieur avec un tableau dans lequel sont enregistrés les identifiants ou l'identification des stations (151, 152, 153) et des listes de références avec les identificateurs affectés par station (151, 152, 153) dont l'émission est autorisé dans les messages de la station (151, 152, 153) qui émet la liste, et un message de sécurité pourvu d'un mesure de sécurité étant émis par une unité d'émission de la station de surveillance (140) centrale vers la station (151, 152, 153) dans le cas où la liste de référence associée ne possède aucune entrée pour un identificateur enregistré dans la liste reçue, et l'unité logique (18-3) étant conçue pour recevoir le message de sécurité de la part de la station de surveillance (140) centrale et effectuer une mesure de sécurité communiquée dans le message de sécurité.

7. Station (151, 152, 153) électronique selon la revendication 6, le bus de communication (104) étant conçu selon une variante de la famille des bus CAN, ce conformément aux bus « Controller Area Network », et la mesure de sécurité étant réalisée sous la forme du déclenchement de l'état Bus désactivé pour la station (151, 152, 153).

8. Station de surveillance (140) centrale destinée à la connexion à un bus de communication (104), un certain nombre de stations (151, 152, 153) électroniques étant mises en réseau par le bus de communication (104), les messages transmis par le biais du bus de communication (104) étant **caractérisés par** un identificateur, une spécification étant effectuée pour chaque station (151, 152, 153) afin de définir quels messages pourvus de quels identificateurs sont autorisés à être émis par la station (151, 152, 153), une règle d'unicité s'appliquant, laquelle interdit qu'une autre station (152, 153) émette un message de données utiles pourvu d'un identificateur qui est déjà réservé pour cette station (151), et une liste à propos des identificateurs des messages effectivement émis par la station (151, 152, 153) étant tenue par une unité de protocole (18-1) dans une station (151, 152, 153), **caractérisée en ce que** la station de surveillance (140) centrale est conçue pour recevoir la liste de la part d'une station (151, 152, 153) avec un message qui contient une entrée pour un identifiant de la station (151, 152, 153) émettrice, et **en ce que** la station de surveillance (140) centrale contient une instance de surveillance de niveau supérieur, laquelle est conçue pour effectuer une comparaison des identificateurs enregistrés dans la liste avec un tableau présent dans la station de surveillance (140) centrale, dans lequel sont enregistrés les identifiants ou l'identification des stations (151, 152, 153) du bus de communication (104) et des listes de références avec les identificateurs affectés par station (151, 152, 153) dont l'émission est autorisée dans les messages de la station (151, 152, 153) qui émet la liste.

9. Station de surveillance (140) centrale selon la revendication 8, la station de surveillance (140) centrale possédant une unité d'émission qui est conçue pour émettre un message de sécurité pourvu d'une mesure de sécurité vers la station (151, 152, 153) dont l'identifiant coïncide avec l'identifiant en rapport avec une liste reçue, pour lequel la liste de référence associée ne possède aucune entrée pour un identificateur enregistré dans la liste reçue.

10. Station de surveillance (140) centrale selon la revendication 9, le bus de communication (104) étant conçu selon une variante de la famille des bus CAN, ce conformément aux bus « Controller Area Network », et la mesure de sécurité étant réalisée sous la forme du déclenchement de l'état Bus désactivé pour la station (151, 152, 153).
